(19) Europäisches Patentamt
European Patent Office
Office européen des brevets

(11) **EP 0 970 593 B1**

(12) **FASCICULE DE BREVET EUROPEEN**

(45) Date de publication et mention
de la délivrance du brevet:
**16.01.2013 Bulletin 2013/03**

(51) Int Cl.:
***H05B 41/28*** *(2006.01)*     ***H02M 1/00*** *(2007.01)*

(21) Numéro de dépôt: **98917245.7**

(22) Date de dépôt: **26.03.1998**

(86) Numéro de dépôt international:
**PCT/FR1998/000617**

(87) Numéro de publication internationale:
**WO 1998/044764 (08.10.1998 Gazette 1998/40)**

(54) **PROCEDE ET DISPOSITIF D'ALIMENTATION DE LAMPES A DECHARGE**

SYSTEM ZUR SPANNUNGSVERSORGUNG EINER LAMPENGRUPPE

POWER SUPPLY SYSTEM FOR A GROUP OF LAMPS

(84) Etats contractants désignés:
**AT BE CH DE DK ES FI FR GB GR IE IT LI LU MC NL PT SE**
Etats d'extension désignés:
**RO**

(30) Priorité: **27.03.1997 FR 9704023**

(43) Date de publication de la demande:
**12.01.2000 Bulletin 2000/02**

(73) Titulaires:
• **Boudan, Jacques Emile**
**13480 Cabries (FR)**
• **Froidefond, Jacques**
**13480 Cabries (FR)**

(72) Inventeurs:
• **Boudan, Jacques Emile**
**13480 Cabries (FR)**

• **Froidefond, Jacques**
**13480 Cabries (FR)**

(56) Documents cités:
**EP-A- 0 516 122     WO-A-91/00643**
**WO-A-93/21683     WO-A-94/27419**
**DE-A- 19 502 772     US-A- 4 277 728**
**US-A- 4 630 005**

• **SCHMIDT O R: "QUASI RESONANT AC/DC FORWARD CONVERTER WITH SINUSOIDAL INPUT CURRENT" PROCEEDINGS OF THE INTERNATIONAL TELECOMMUNICATIONS CONFERENCE (INTELEC), VANCOUVER, OCT. 30 - NOV. 3, 1994, no. CONF. 16, 30 octobre 1994, INSTITUTE OF ELECTRICAL AND ELECTRONICS ENGINEERS, pages 345-350, XP000623351**

EP 0 970 593 B1

**Description**

La présente invention a pour objet un procédé et un dispositif d'alimentation de lampes à décharge d'un réseau d'éclairage public.

Le secteur technique de l'invention est le domaine des procédés et dispositifs d'alimentation de lampes à décharge de réseaux d'éclairage public.

Les lampes à décharge utilisées pour l'éclairage public sont alimentées classiquement par un réseau d'énergie au travers d'inductances appelées ballasts. L'éclairement et la puissance de ces lampes sont fortement influencés par la tension du réseau d'énergie. De plus, on observe une corrélation défavorable entre les besoins en éclairement culminant dans la soirée lorsque la circulation est la plus forte, et la consommation d'énergie dont la pointe est coïncidente. La tension du réseau est alors la plus faible et le niveau d'éclairement est le plus bas.

Au cours de la nuit, pendant les « heures creuses », la tension du réseau rejoint sa limite supérieure, il lui correspond donc avec les dispositifs classiques utilisés en éclairage public un niveau d'éclairement maximal, alors que le trafic, le confort des riverains, et les économies d'énergie impliquent un niveau d'éclairement réduit. Il en résulte un important gaspillage de l'énergie électrique.

Sur un autre plan, il est maintenant reconnu que la fréquence (50 ou 60 hertz) du réseau électrique est trop faible pour assurer le maintien de l'ionisation de l'arc des lampes qui est alors interrompu et réamorcé deux fois par période, soit 100 (ou 120) fois par seconde. Le réamorçage est obtenu par une pointe de tension qui provoque le vieillissement des lampes alors que les oscillations d'éclairement engendrent un effet stroboscopique, source de fatigue visuelle ; en alimentant l'arc par un courant de fréquence supérieure à 5 kilohertz, ces inconvénients sont supprimés et la durée de vie de la lampe est fortement accrue.

La demande de brevet FR 2.542.152 décrit un procédé et un dispositif d'alimentation de lampes à décharge, à des fréquences de l'ordre de 800 hertz à 150 kilohertz, par un signal carré, pseudo-carré ou trapézoïdal, délivré par un générateur qui peut être alimenté en courant continu par un montage représenté figures 6 et 7 de ce document ; ce montage comporte :

- un pont de diode connecté au secteur,
- une self-inductance connectée à cette source unipolaire par un commutateur piloté par un circuit de commande fixant la durée du cycle de récurrence et le temps de conduction ; l'énergie emmagasinée dans la self-inductance est déchargée dans des condensateurs de sortie, par passage dans une diode ; le pilotage du transistor de commutation est effectué par un montage comportant un oscillateur, un univibrateur et des transistors de commande ; un transistor raccordé à un circuit équipé de diodes Zenner agit sur le temps de conduction du commutateur en fonction de la tension de sortie, et effectue une régulation de la tension de sortie, afin de compenser des fluctuations de la charge ou de la tension secteur.

Ce type de convertisseur alternatif - continu, qui est équipé d'un asservissement régulant la tension de sortie, possède divers inconvénients, en particulier dûs à la complexité des circuits d'asservissement pour obtenir un fonctionnement stable, précis et sûr, et liés à la difficulté de satisfaire aux contraintes normatives visant à limiter les ondes électro-magnétiques rayonnées ou conduites.

Le brevet US 4.630.005 décrit un convertisseur alternatif - continu alimentant plusieurs convertisseurs continu - alternatif (formant un genre de ballast électronique), qui alimentent chacun une ou plusieurs lampes à décharge ; le convertisseur alternatif - continu est constitué d'un simple montage de diodes adapté pour une tension d'entrée triphasée et pour délivrer en sortie une tension continue sur trois fils.

Le brevet US 4.277.728 décrit (figures 1 et 2a) un système d'alimentation similaire à celui décrit dans le brevet FR 2.542.152 ; la variante de réalisation du convertisseur alternatif - continu illustré figure 2b de ce document utilise un transformateur dont le primaire est raccordé en série avec un transistor de commutation, à la sortie d'un pont de diode équipé d'un filtre ; la tension de sortie est régulée en faisant varier, soit le rapport cyclique, soit la fréquence de commutation ; la tension de sortie, filtrée de l'harmonique 2 de la fréquence du réseau, est utilisée pour modifier la fréquence du circuit de commande du commutateur, afin de maintenir une tension de sortie constante ; les dispositifs décrits dans ce document sont adaptés à l'alimentation d'une seule lampe, ce qui ne nécessite qu'une puissance faible, soit quelques dizaines de watts.

La présente invention a pour objet de proposer un procédé et un dispositif d'alimentation d'un groupe de plusieurs lampes à décharge, qui soient améliorés, et a pour objectif de proposer un réseau d'éclairage public mettant en oeuvre ces procédés et dispositifs.

Un objectif de l'invention est de proposer un dispositif simple, fiable, peu coûteux, permettant d'alimenter un réseau de distribution en courant continu à partir d'un réseau alternatif, pour l'éclairage public, et un procédé amélioré d'alimentation d'un réseau d'éclairage public.

Un objectif de l'invention est de remédier aux inconvénients des systèmes généralement utilisés pour l'alimentation des lampes à décharge employées dans l'éclairage public.

Selon un premier aspect, l'invention consiste à proposer un système d'alimentation d'un groupe de lampes à décharge selon la revendication 1.

En d'autres termes, l'invention consiste à alimenter un groupe de lampes situées à l'aval d'un point de raccordement au réseau d'énergie par une unité centrale qui l'isole galvaniquement du réseau et transmet aux générateurs associés aux lampes une tension continue d'alimentation indépendante des fluctuations du réseau et variable suivant une consigne de puissance. L'unité centrale prélève au réseau avec un faible taux d'harmonique un courant sinusoïdal en phase. Les générateurs fournissent aux lampes un signal électrique périodique de fréquence « hypersonique » qui accroît de façon significative la durée de vie des lampes.

Selon un autre aspect, l'invention consiste à proposer un dispositif d'alimentation en courant continu à partir d'une source en courant alternatif, particulièrement destiné à l'alimentation d'une pluralité de lampes à décharge d'un réseau d'éclairage public, d'une puissance de plusieurs centaines ou milliers de watts, qui comporte :

- un pont de diode,
- au moins un convertisseur tension redressée - tension continue qui est alimenté par le pont de diode, qui est un convertisseur à transformateur, dont la sortie est galvaniquement isolée de l'entrée, et qui est dénué d'asservissement de la tension de sortie.

L'invention repose sur la combinaison :

- de l'utilisation d'un convertisseur à transformateur (généralement appelé convertisseur « fly-back »), et
- d'un asservissement de la puissance délivrée (ou « injectée ») au primaire du transformateur, à l'exclusion de tout asservissement de la tension de sortie, et
- d'une isolation galvanique entre l'entrée et la sortie du convertisseur.

L'utilisation d'un convertisseur « fly-back » pour des puissances généralement au moins égales à 1 kilowatt, va à l'encontre d'un préjugé généralement admis selon lequel ce type de convertisseur est réservé à des applications ne nécessitant pas plus de quelques dizaines de watts, notamment à cause du fait que lorsque la puissance croît, l'inductance de fuite du transformateur limite son utilisation, ou du fait que le rendement de ce type de convertisseur est affecté par cette fuite.

L'absence de régulation de la tension continue de sortie du convertisseur va également à l'encontre d'un préjugé généralement admis, selon lequel il est nécessaire de réguler cette tension pour éviter le gaspillage entraîné par les variations de la tension du réseau ; cependant, les utilisateurs du système effectuant la régulation de tension, ont pour pratique de modifier les points de consigne du régulateur au cours du temps, pour compenser les pertes d'éclairement causées notamment par la perte de puissance absorbée par la lampe au cours de son vieillissement ; l'injection d'une puissance fixée par des consignes supprime ce facteur.

L'invention procure de nombreux avantages.

L'absence de boucle d'asservissement de la tension continue de sortie du convertisseur permet la simplification de celui-ci, en réduit le coût et en augmente la fiabilité ; cette caractéristique contribue en outre à la possibilité de mise en parallèle de plusieurs convertisseurs alternatif - continu dont les sorties peuvent être raccordées à un potentiel commun, et qui peuvent être réglés, indépendamment ou non, sans interférer l'un sur l'autre et sans provoquer d'instabilités de fonctionnement ; cette mise en parallèle favorise l'obtention à moindre coût d'un convertisseur alternatif - continu de puissance élevée, capable d'alimenter plusieurs dizaines de générateurs alimentant des lampes à décharge.

Cette facilité de mise en parallèle résulte également de l'isolement galvanique entre l'entrée et la sortie du convertisseur, lequel isolement résulte en partie de la structure du convertisseur « fly-back ».

L'isolement galvanique permet en outre de raccorder la sortien du convertisseur sur tous types de réseaux alimentant les groupes de lampes à décharge d'éclairage public.

Grâce à l'isolement galvanique et si la structure du réseau le permet, ce qui est le cas notamment des réseaux conformes aux normes, la tension continue en sortie peut être répartie par rapport à la terre grâce à un montage diviseur prévu sur le premier étage et raccordé lors de la pose. Les tensions maximales sont alors de + 100 volts et - 100 volts, proches des valeurs de sécurité. Le temps de réaction des dispositifs de protection prévus par les normes est alors dix fois plus long que celui correspondant à une tension normale (200 volts) du réseau (0,1 seconde au lieu de 0,01 seconde).

En outre, il est facile de raccorder l'entrée de trois convertisseurs (de préférence identiques) alimentant le même groupe de lampes, à un réseau alternatif (amont) triphasé, ce qui permet d'équilibrer la puissance consommée par phase.

Selon une autre caractéristique importante, on contrôle en permanence que la fermeture du commutateur s'effectue à courant nul (« zero switching »), c'est-à-dire après la « vidange » complète de l'énergie inductive emmagasinée dans le circuit magnétique du transformateur pendant la période de commutation précédente.

En fonctionnant à période constante et temps de conduction constant, le courant moyen soutiré au cours d'une période T est proportionnel à la tension instantanée du réseau ; ceci résulte des propriétés de la self-inductance en supposant une commutation à courant nul ; le prélèvement sinusoïdal et en phase s'obtient donc sans nécessité d'un asservissement de contrôle.

La suppression de l'amplification d'écart, qui est nécessaire avec des montages de type « Boost » tels que celui décrit dans le document FR 2.542.152, outre qu'elle simplifie le dispositif, change radicalement les conditions de sécurité en supprimant les risques d'accrochage. Il devient possible d'utiliser un filtre passe-bas d'entrée à deux cellules, beaucoup plus efficace qu'un filtre à une cellule.

La conduction à courant nul (« zero switching ») suppose la vidange complète de l'énergie inductive stockée dans le circuit magnétique. A cette condition, et à temps de conduction $t_c$ constant, le prélèvement énergétique à chaque période de travail n'est fonction que du carré de la tension u du réseau ; si la tension efficace du réseau amont est constante, la puissance injectée est proportionnelle à la fréquence de travail.

La distorsion de la sinusoïde du réseau restant dans ses limites acceptables, la relation entre la valeur de crête lissée et la valeur efficace est pratiquement une constante (racine de deux). On saisit cette valeur de crête pour moduler le temps de conduction, de telle sorte que :

$$t_c \ U_{eff} = t_c \ max \ U_{eff}. \ minim$$

On injecte dans le groupe de lampes une puissance indépendante de la tension réseau amont, variable suivant la période de commutation T, qui sert de consigne ; cette « injection de puissance » programmable s'effectue sans asservissement.

Grâce à ce mode de fonctionnement, l'aval ne réagit pas sur l'amont, ce qui autorise la mise en parallèle des sorties de plusieurs unités centrales, sans limitation de puissance, et à partir de différentes sources d'énergie.

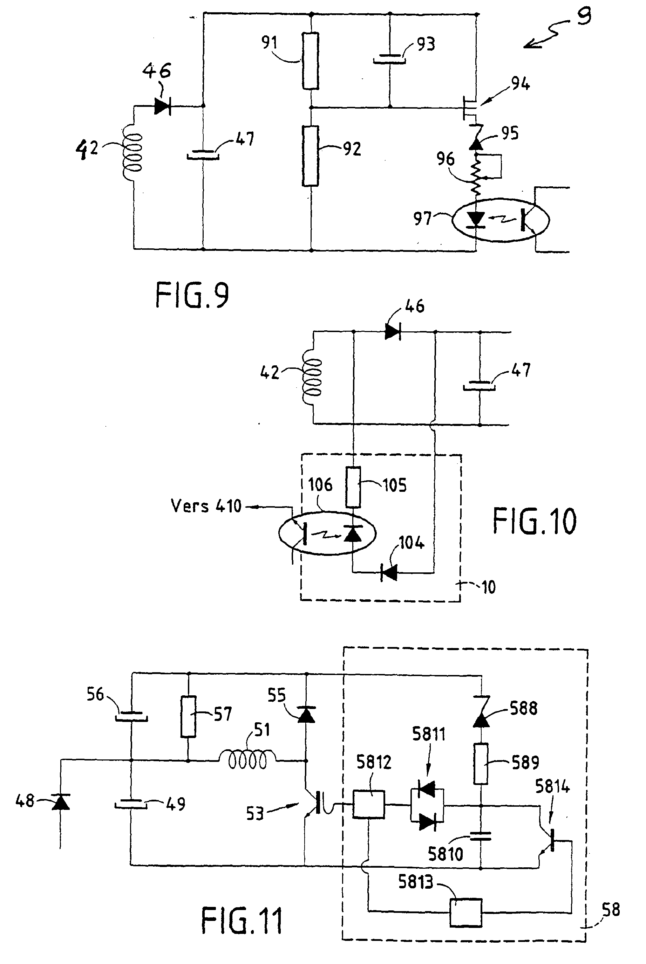

La commutation à courant nul nécessite que l'énergie emmagasinée soit entièrement transférée à chaque cycle. Cet état est facilement vérifiable, la tension secondaire s'inversant brusquement en fin de vidange de l'énergie du circuit magnétique ; à cet effet, on utilise un coupleur optique (figure 10) muni de protections adéquates, branché entre les bornes de la diode de sortie. Le rôle de ce dispositif est d'interdire la conduction tant que l'énergie n'est pas vidangée dans le circuit d'utilisation.

Suivant un autre montage, un coupleur optique muni de protections adéquates peut être monté en parallèle sur des diodes de redressement montées en série, par exemple trois diodes en série.

Selon d'autres modes préférés de réalisation du dispositif selon l'invention :

- le dispositif peut comporter plusieurs convertisseurs tension redressée - tension continue identiques, qui peuvent être alimentés par un pont de diode commun, et dont les sorties sont raccordées en parallèle ;
- en particulier le dispositif peut comporter un à quatre, notamment trois ponts de diode et un à douze, notamment trois, six ou neuf convertisseurs dont les sorties sont raccordées en parallèle, pour être utilisé en étant alimenté par exemple par un réseau alternatif triphasé.
- ledit convertisseur tension redressée - tension continue comporte un circuit ou une branche (figure 9) de surveillance de tension de sortie, qui comporte une diode Zenner raccordée en série avec un potentiomètre de réglage de seuil et avec l'entrée (et/ou l'émetteur) d'un transducteur (ou transmetteur) dont l'entrée est isolée galvaniquement de la sortie ; le transducteur est de préférence constitué par un opto-coupleur ; ledit circuit ou branche est raccordé aux bornes de sortie du convertisseur, la tension seuil de ce circuit étant peu supérieure (de environ 1 à 25%, en particulier de l'ordre de 5 % à 15 %) à la tension normale de sortie du convertisseur ; la sortie du transducteur, de préférence constituée par le récepteur d'un opto-coupleur, est raccordée au circuit d'ajustage de la fréquence de commutation du convertisseur, de façon à réduire la puissance moyenne délivrée en sortie du convertisseur, lorsque la tension de sortie dépasse une valeur variable lors de la phase de démarrage durant plusieurs minutes et prédéterminée en régime établi, ledit transducteur ou opto-coupleur étant par conséquent normalement inactif ;

- le secondaire du transformateur est raccordé à une diode (ou à plusieurs diodes en série) aux bornes de laquelle (ou desquelles) est connecté un circuit (ou branche) de contrôle de commutation à courant nul du commutateur du convertisseur ; le circuit de contrôle de commutation à courant nul comporte l'entrée d'un transducteur dont la sortie est isolée galvaniquement de l'entrée, de préférence comporte l'émetteur d'un opto-coupleur dont le récepteur (sortie du transducteur) est raccordé au circuit de commande de commutation du commutateur, de façon à n'autoriser la fermeture du commutateur qu'après annulation du courant sortant du secondaire du transformateur ;

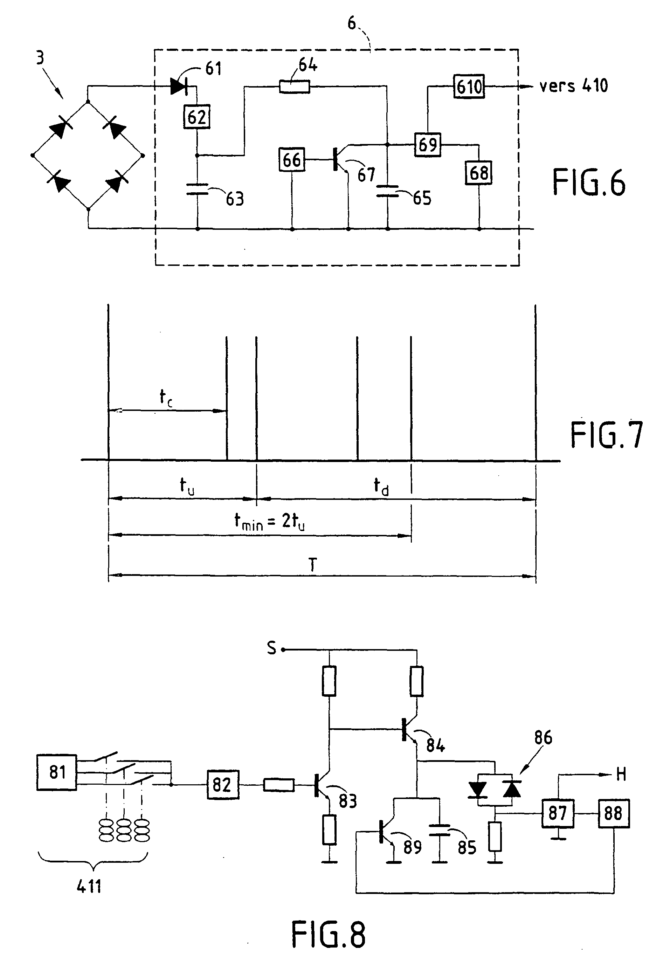

- le convertisseur comporte un circuit de commande de commutation du commutateur (figure 8) qui comporte des moyens (dits « horloge ») pour ajuster la fréquence de commutation du commutateur en fonction d'une consigne de puissance à délivrer en sortie, en maintenant constant un temps de conduction du commutateur ; les moyens d'ajustement de fréquence (et/ou l'horloge) comportent de préférence une source de tension continue, plusieurs tensions de référence représentant des consignes de puissance, une source de courant proportionnel à la tension représentant la consigne de puissance, un condensateur, un diac, une temporisation de durée constante ;

- le convertisseur comporte un circuit compensateur des variations de tension alternative du réseau alimentant le pont, qui comporte (figure 6) :

    * un montage simple détectant une valeur $U_a$ proche de la tension de crête et dont la valeur est suffisamment représentative de la tension efficace $U_c$ , dans les limites de variations tolérées de la distorsion de la sinusoïde, de telle sorte que $U_a = k \ U_c$ ;

* la variation constatée de k étant compatible avec la précision recherchée dans l'opération de correction ; ces conditions sont remplies avec un filtrage dont la constante de temps de charge est peu inférieure à 10 millisecondes (par exemple entre 6 et 10 millisecondes) pour un réseau de 50 hertz, ou bien est peu inférieure à 12 millisecondes pour un réseau en 60 hertz, et dont la constante de temps de décharge est peu supérieure à 250 millisecondes, par exemple entre 300 et 250 millisecondes ; (à titre d'exemple dans la figure 6 : R62 = 2,2 kohm, C63 = 4,4 microfarad, R64 = 68 kohm) ;

* un circuit RC dont le condensateur est périodiquement déchargé à chaque cycle d'horloge, une tension de référence,

* un comparateur apte à diminuer la consigne de puissance ;

- ledit convertisseur comporte de préférence en outre :

    * un filtre d'entrée de protection contre les ondes de tension,
    * un filtre d'entrée passe-bas anti-réjection,

lesquels filtres sont disposés en amont du pont de diode ;

A la sortie positive du pont de diodes, en point commun avec l'entrée du primaire du (ou des) transformateur(s), est branchée la référence d'un circuit récupérateur de l'énergie de fuite du circuit magnétique du (ou des) transformateur(s) principal (-aux), lequel circuit récupérateur comporte un transformateur secondaire dont le secondaire disposé en sortie avec une diode est raccordé en sortie du convertisseur.

Selon un autre aspect, l'invention consiste à proposer un système ou réseau d'alimentation d'une pluralité de lampes à décharge pour l'éclairage public, qui comporte un dispositif selon l'invention, et un réseau de transport pour l'alimentation en continu par ledit dispositif, d'une pluralité de convertisseurs continu - alternatif (dits générateurs), qui chacun alimentent une lampe à décharge sous une tension alternative, dont la fréquence est de préférence de l'ordre de 10 kilohertz à 20 kilohertz, en particulier voisine de 15 kilohertz ; ledit réseau de transport peut comporter deux fils isolés par rapport au neutre et/ou à la terre et être équipé de moyens de protection différentielle.

Selon un autre aspect, l'invention consiste à mettre en oeuvre un procédé d'alimentation d'une pluralité de lampes à décharge d'un réseau d'éclairage public, chaque lampe étant associée à un convertisseur continu - alternatif ou générateur, dans lequel réseau :

- on choisit un dispositif convertisseur selon l'invention dont la puissance est adaptée à la puissance normalement consommée par les lampes et leurs générateurs associés,

- on raccorde l'entrée dudit dispositif à un réseau électrique fournissant une source de tension alternative, mono-, bi- ou triphasée, par exemple sous une tension de 230 volts et une fréquence de 50 hertz,

- on raccorde les générateurs associés aux lampes en parallèle à la sortie du dispositif, par un réseau de transport de courant continu comportant deux fils de préférence isolés,

- on ajuste une ou plusieurs consignes de puissance correspondant à la puissance normalement consommée par la pluralité de lampes selon un ou plusieurs modes d'éclairage prédéterminé(s),

- on alimente de préférence les générateurs par une tension continue dont les potentiels par rapport à la terre sont de valeur voisine et de signe opposé, et en tant que de besoin :

- lors du démarrage, la puissance absorbée par les générateurs du groupe de lampes non amorcées, est très faible et croît lentement par échelons au moment des amorçages successifs, puis progressivement pendant la durée de mise en régime, qui peut atteindre 20 minutes, jusqu'à atteindre la puissance fixée ; pendant cette phase, la consigne de puissance est limitée par le circuit de surveillance de la tension de sortie, puisque lorsque la puissance a atteint une valeur suffisante, ledit circuit cesse son action ; d'autre part, dans le cas exceptionnel où une ou plusieurs lampes sont détruites, ou une partie du réseau est coupée, le groupe restant de lampes en fonctionnement ne peut absorber la puissance fixée, le circuit de surveillance de tension en sortie reprend sa fonction de limitation de puissance jusqu'au retour à l'état initial.

Cette fonction intervient sans délai en cas d'apparition d'un défaut, ne permettant pas au groupe de lampes d'absorber la puissance fixée par le réglage lorsque la tension ligne atteint le seuil fixé par le circuit de surveillance.

Lorsque par suite d'une erreur de donnée, la puissance nominale du groupe de lampes excède la puissance maximale du convertisseur alternatif - continu choisi, la résistance apparente du groupe de générateurs, vue de la source de tension continue sortant du convertisseur, ne permet pas de décharger l'énergie magnétique à chaque période de commutation, le circuit de contrôle de commutation à courant nul réduit la puissance injectée ; cet état anormal déclenche un signal d'alarme, l'éclairement programmé ne pouvant être atteint.

En cas de court-circuit accidentel dans un circuit reliant le générateur à sa lampe, ou dans une lampe, la fréquence du générateur croît et la puissance demandée en ligne devient très faible ; le fonctionnement est similaire à celui décrit ci-avant.

En cas de court-circuit accidentel sur la ligne entre le convertisseur et les générateurs, le circuit de contrôle de commutation à courant nul suspend le fonctionnement des commutateurs, mettant le convertisseur en veille, jusqu'à disparition du défaut ; le même circuit interdit le démarrage sur court-circuit.

Les avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre de façon schématique un chronogramme de l'intensité des courants circulant dans le primaire et dans le secondaire du transformateur du convertisseur « fly-back », et de la tension de collecteur du transistor commutateur de ce convertisseur.

La figure 2 illustre de façon schématique un dispositif convertisseur alternatif - continu comportant un pont de diodes et deux convertisseurs tension redressée - tension continue dont les sorties sont raccordées en parallèle.

La figure 3 représente sous forme de schéma bloc fonctionnel les principales fonctions d'une unité centrale suivant l'invention et son utilisation pour l'alimentation en courant continu d'un réseau d'éclairage public.

La figure 4 est un schéma simplifié d'un générateur associé à une lampe à décharge pour son alimentation à partir du courant continu produit par l'unité centrale.

La figure 5 est un schéma simplifié des circuits principaux de l'unité centrale.

La figure 6 décrit une réalisation simplifiée du montage compensateur de tension.

La figure 7 illustre le principe de fonctionnement de l'horloge de l'unité centrale.

La figure 8 décrit un dispositif simple et sûr constituant l'horloge du bloc fonctionnel 410 permettant d'introduire la consigne de puissance.

La figure 9 illustre un circuit de mesure et de limitation de la tension continue de sortie du convertisseur (unité centrale).

La figure 10 illustre un circuit de détection d'annulation du courant circulant dans le secondaire du transformateur de l'unité centrale et son utilisation pour autoriser la mise en conduction du commutateur de l'unité centrale.

La figure 11 illustre un circuit récupérateur de fuite intégré à l'unité centrale.

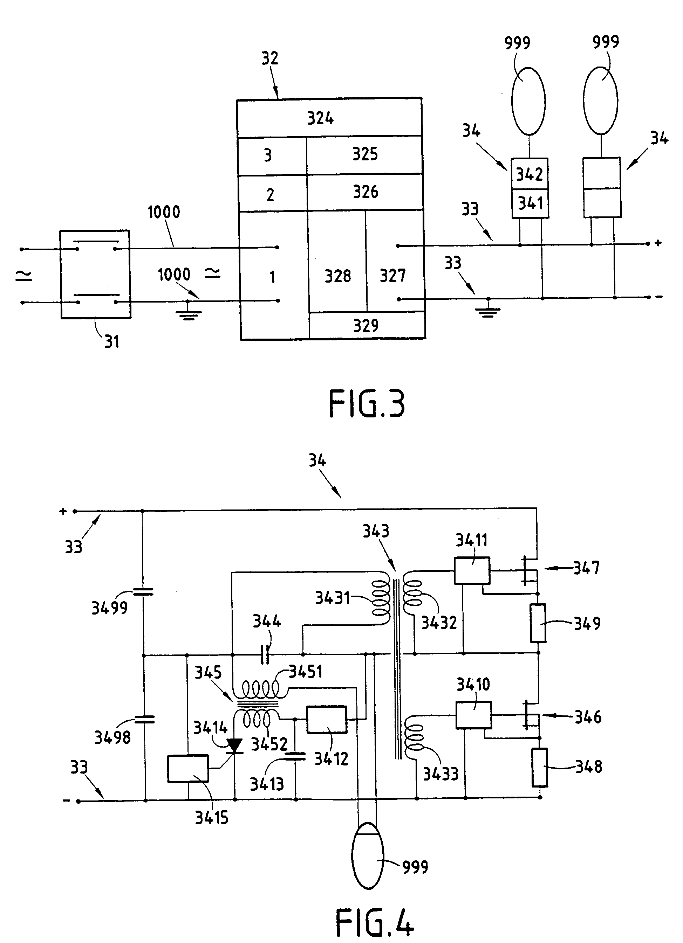

Par référence à la figure 3, l'unité centrale 32 dont l'entrée est raccordée au réseau alternatif par l'intermédiaire d'une armoire 31 de commande, comprend les blocs fonctionnels suivants : un module 1 de protection contre les ondes de choc, un filtre 2 de fréquence de travail, un redresseur 3, un filtre 324 actif pour prélèvement de courant sinusoïdal et en phase, un module 325 de démarrage progressif, un moyen 326 d'isolement galvanique du circuit de sortie, un moyen 327 de stockage et régulation de puissance, un moyen 328 de protection en cas de coupure de ligne et court-circuit, un dispositif horaire 329.

La sortie 33 de l'unité centrale dessert la ligne d'alimentation du groupe des générateurs ; chaque générateur 34 alimentant une lampe 999 comprend : un oscillateur 341 et un amorceur 342.

Le fonctionnement est le suivant : la ligne 33 (ou réseau continu aval) est alimentée en tension continue par une source galvaniquement isolée du réseau alternatif amont 1000. Le régime de terre peut être librement fixé pour assurer la meilleure sécurité. Suivant le programme horaire fixé par le dispositif horaire 329, les lampes fonctionnent suivant l'une des trois consignes de puissance préprogrammées dans le bloc 327.

Les courants rejetés par les générateurs 34 dans la ligne 33 sont internes au réseau continu aval. Ils n'ont à répondre aux normes que pour les perturbations rayonnées. Les oscillateurs de relaxation à rampe utilisés dans les générateurs 34 sont très peu rayonnants et des précautions connues permettent d'assurer une conformité aux normes. La réalisation des générateurs est donc particulièrement simple et fiable.

La figure 4 donne à titre d'exemple, un schéma simplifié d'un générateur 34 :

3498 et 3499 sont des condensateurs,
343 est un transformateur de primaire 3431 et comportant deux secondaires 3432 et 3433,
344 est un condensateur de rampe,
345 est une self-inductance à enroulement auxiliaire,
346 et 347 sont des commutateurs,
348 et 349 sont des résistances de mesure de l'intensité,
3410 et 3411 sont des circuits à seuils de courant,
3412 est un multiplicateur de tension,
3413 est un condensateur haute tension,
3414 est un thyristor,
3415 est une base de temps.

Avec des composants à grande diffusion (commutateurs IGBT et transformateurs en ferrite), la puissance nominale d'un convertisseur élémentaire peut être de 500 watts utiles ; l'unité centrale peut délivrer une puissance utile de 1,5 kW, 3 kW, 6kW, grâce à sa structure modulaire.

L'utilisateur choisit l'unité centrale et la calibre avant installation, en fonction de la puissance nominale absorbée par le groupe de lampes ; la puissance maximale est ajustable dans une plage de plus ou moins 16 %, par échelon de 1 %.

Le fonctionnement de l'oscillateur est celui d'un oscillateur de relaxation push - pull série fournissant un signal symétrique trapézoïdal. Les circuits à seuils de courant 3410 et 3411 bloquent alternativement les commutateurs 346 et 347, décidant ainsi de la fréquence d'oscillation. Alimenté par un signal de fréquence « hypersonique » (généralement 10 kilohertz à 100 kilohertz), le circuit de l'arc de la lampe 999 se comporte, en régime établi, comme une résistance dont la valeur est fonction de la puissance. L'état de l'arc est thermiquement instable. La stabilité du circuit est rétablie par l'impédance de l'inductance. D'autre part, l'efficacité lumineuse de la lampe dépend de la forme du signal tension appliqué à l'arc. Il existe donc une relation optimale reliant la tension d'alimentation de l'oscillateur et la valeur des seuils de courant. Cette relation est obtenue en déterminant les valeurs d'un pont d'impédance situé dans chaque circuit seuil de courant 3410 et 3411, de manière à obtenir la stabilité de fonctionnement et la meilleure efficacité lumineuse dans la gamme de puissances utilisées. Grâce à ce dispositif, la valeur de la tension de la ligne 33 détermine la puissance absorbée par la lampe et assure la répartition de la puissance fournie par l'unité centrale entre les différents générateurs 34 alimentés par l'unité centrale.

Le fonctionnement de l'amorceur est le suivant : lors du démarrage, le multiplicateur 3412 charge le condensateur 3413.

Le thyristor 3414 décharge le condensateur 3413 à travers l'enroulement auxiliaire 3452 de la self-inductance, provoquant une impulsion de haute tension aux bornes de la lampe.

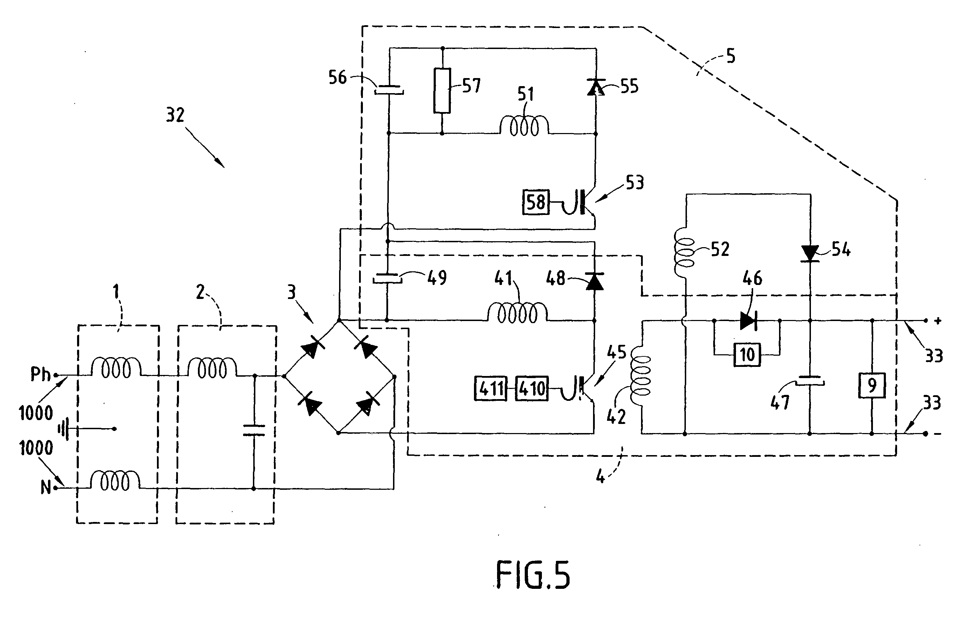

Par référence à la figure 5, l'unité centrale 32 répond aux caractéristiques définies précédemment : isolement galvanique entre le réseau d'énergie 1000 et la ligne 33 d'alimentation des lampes, et fourniture d'une tension continue indépendante de la tension du réseau amont, et variable (flottante) en fonction de la consigne de puissance de l'unité centrale, et de la charge.

Les montages décrits permettent d'obtenir d'une manière simple et sûre un prélèvement de courant sinusoïdal en phase avec la tension, répondant aux conditions normatives concernant les harmoniques de courant ; ces avantages sont obtenus en tenant compte des caractères spécifiques de l'utilisation : puissance nominale définie lors de l'installation - démarrage à vide - montée progressive en puissance - transitions lentes entre les régimes.

La figure 5 fournit un schéma simplifié des circuits principaux de l'unité centrale 32 qui comporte ; un filtre 1 de protection contre les ondes de choc (surtensions du réseau amont) d'un type connu ; un filtre 2 passe-bas arrêtant la réjection des courants de moyenne fréquence vers le réseau amont, un pont 3 redresseur à diodes, un circuit principal 4 du convertisseur « flyback », qui comporte :

le primaire 41 d'un transformateur à entrefer qui a pour secondaire 42, un commutateur 45 de puissance, une diode 46 rapide de puissance, un condensateur 47 de stockage, une diode 48 rapide, un condensateur 49.

410 est un bloc fonctionnel commandant le commutateur 45, et 411 est un bloc fonctionnel fixant la consigne de puissance.

Un circuit auxiliaire 5 appelé récupérateur de fuite, du même type que le circuit 4, comporte :

le primaire 51 d'un transformateur à entrefer qui a pour secondaire 52, un commutateur 53 de puissance, des diodes rapides 54 et 55, un condensateur 56 de stockage, une résistance 57 de dissipation, un bloc fonctionnel 58 commandant le commutateur 53.
Le primaire 41 du transformateur à entrefer est connecté au pôle positif d'un pont redresseur et à un commutateur 45 rendu passant périodiquement pendant une durée constante $t_c$ ; un circuit secondaire est constitué par le secondaire 42 connecté à un condensateur 47 à travers une diode 46 ; les éléments paramétriques du circuit sont calculés pour que le passage en conduction du commutateur 45 s'effectue à courant nul dans toute la gamme de puissance utilisée.

Le fonctionnement est le suivant : la self-inductance du primaire 41 et le rapport de transformation des enroulements 41 et 42 sont calculés de telle sorte que dans toute la gamme de puissance utilisée, le commutateur 45 passe en conduction à courant nul.

A cette condition, dite « de commutation à courant nul », le courant moyen $i_h$ sur une période, à la fréquence de commutation du montage, par exemple voisine de 15 kilohertz, est donné par la formule :

$$1) \qquad i_h = \frac{1}{2} \; \frac{u t_c}{L} \; \frac{t_c}{T}$$

Dans cette formule :

$i_h$ est le courant moyen sur la période d'horloge T.
u est la valeur instantanée de la tension du réseau.
L est la self-inductance du primaire 41.
$t_c$ est la durée de conduction du commutateur 45.
T est la période d'horloge du bloc fonctionnel 410.

L'action du filtre passe-bas 2 assure un courant instantané i prélevé au réseau pratiquement égal à la valeur moyenne $i_h$ du courant pendant la période d'horloge.

La formule 1) montre que, si les durées $t_c$ et T sont constantes, le courant instantané du réseau est proportionnel à la tension instantanée :

$$2) \quad i = \frac{u}{R}$$

avec

$$3) \quad R = \frac{2LT}{t_c^2}$$

Vu du réseau, le régulateur se comporte comme une résistance, ne générant pas d'harmoniques de courant et assurant un facteur de puissance égal à l'unité, le déphasage introduit par le filtre passe-bas à deux étages étant faible. D'autre part, l'énergie prélevée pendant le temps de conduction est transmise aux pertes près au circuit secondaire. Le dispositif impose donc une puissance instantanée indépendamment des conditions aval, tant que la condition de commutation à courant nul est respectée.

La puissance instantanée est donnée par la formule :

$$4) \quad w = \frac{1}{2} \frac{u^2}{L} \frac{t_c^2}{T}$$

Si la tension du réseau est sinusoïdale, la puissance moyenne est :

$$5) \quad W = \frac{1}{2} \frac{V^2}{L} \frac{t_c^2}{T}$$

V étant la tension efficace du réseau.

La figure 6 décrit une réalisation simplifiée du montage 6 compensateur de tension compris dans le bloc fonctionnel 410, qui assure une puissance moyenne indépendante des variations de la tension du réseau amont en établissant la relation

$$6) \quad V^2 t_c^2 = K^2,$$

K étant une constante.

Le circuit 6, figure 6 comporte :

une diode 61, une résistance de lissage 62 de 2,2 kohm, un condensateur 63 de filtrage de 4,4 microfarad, entre les bornes de sortie du pont redresseur 3,
une résistance 64 de forte valeur, par exemple 68 kΩ,
un condensateur 65 de faible valeur, par exemple 20 nF,
un circuit 66 de décharge du condensateur 63 activé pendant la deuxième phase de l'horloge,
un transistor 67 de décharge,
une référence 68 de tension de quelques volts,
un circuit 69 comparateur interdisant la conduction quand la tension du condensateur 63 atteint la référence 68 ;
un circuit 610 autorisant la conduction du commutateur 45.

Le fonctionnement est le suivant : la diode 61 et la résistance 62 chargent le condensateur 63 à une valeur voisine de la crête du signal de tension du réseau amont, qui est une image satisfaisante de la valeur efficace V de la tension du réseau amont dans les limites pratiques de la distorsion du signal de tension du réseau.

Le condensateur 65 est déchargé à chaque période d'horloge. Le temps de chargement $t_{ch}$ du condensateur 65 à la valeur définie par la référence 68 est inversement proportionnel à la tension du condensateur 63, donc à la valeur V de la tension efficace du réseau amont :

$$7) \quad t_{ch} = \frac{K}{V}$$

Le commutateur 45 est commandé pendant le temps $t_{ch}$ de chargement du condensateur 65 ;

La relation 7 n'est applicable que dans la plage des variations maximales de la tension réseau de plus ou moins 10 %, soit de 207 à 253 volts pour une tension nominale de 230 volts ; en dessous de 207 volts efficaces, soit 292 volts crête, $t_{ch}$ est limité à la valeur $t_{cmax} = t_u$ fixée par l'horloge, et la puissance baisse.

Dans la plage ci-dessus, le temps de conduction $t_c$ est égal à $t_{ch}$ :

$$8) \quad t_c = t_{ch}$$

Nous avons donc :

$$9) \quad t_c = \frac{K}{V}$$

relation équivalente à la relation 6.

La relation 5) montre que la puissance moyenne fournie par le montage est une fonction inverse de la période d'horloge T.

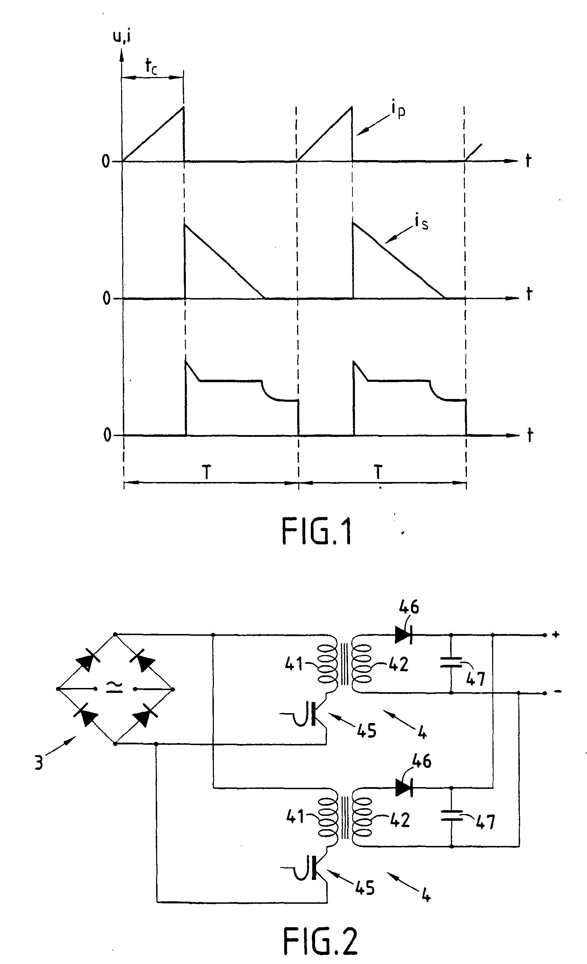

Le figures 1, 7 et 8 en particulier illustrent un procédé et un dispositif permettant à l'unité centrale de fournir d'une manière simple et fiable une puissance fixée par une consigne.

La période d'horloge comporte deux phases représentées sur le diagramme de la figure 7, dans laquelle :

$t_u$ est un temps de durée constante au cours duquel est autorisé le fonctionnement du commutateur 45 de la figure 5.

$t_d$ est un temps variable en fonction de la consigne de puissance.

La période T de commutation est la somme de ces deux durées :

$$10) \quad T = t_u + t_d$$

La durée $t_u$ est la limite maximum de la valeur du temps de commutation (ou conduction du commutateur 45) $t_c$. Elle impose une valeur minimum Umin de la tension efficace du réseau pour laquelle la relation 6) est assurée.

Cette tension correspond par exemple à la tension du réseau moins 10 %. En dessous de cette valeur de tension, la puissance transmise décroît.

Le circuit de contrôle de commutation à courant nul limite la puissance de fonctionnement en cas de baisse de tension compromettant la sécurité du montage.

Lorsque la tension du réseau est au-dessus de Umin, l'unité centrale doit pouvoir fournir la puissance correspondante à la consigne maximum. Grâce au montage compensateur de tension décrit ci-dessus, l'énergie prélevée à chaque période au réseau sera constante.

Le temps $t_v$ de vidange de cette énergie dans le circuit secondaire est donné par la formule :

$$11) \quad t_v = t_c \frac{(n_1)^2}{(n_2)} \frac{u}{U_s}$$

Dans cette formule :

$t_v$ est le temps de vidange,
$t_c$ est le temps de conduction,
$n_1$ est le nombre de spires du primaire 51,
$n_2$ est le nombre de spires du secondaire 52,
u est la valeur instantanée de la tension du réseau,
$U_s$ est la tension de sortie de l'unité centrale.

La valeur maximum de $t_v$ est obtenue lorsque u atteint sa valeur de crête. Pour obtenir le rendement maximum des composants technologiques du montage, nous conviendrons d'établir la relation :

$$12) \quad t_{vmax} = t_c$$

Nous obtenons en partant dans la relation 11

$$13) \quad \frac{(n_1)^2}{(n_2)} = \frac{V\sqrt{2}}{U_s}$$

V étant la valeur efficace de la tension nominale du réseau.

La relation 12) devant être respectée dans toute la gamme de tension fixée, il apparaît que, pour respecter la condition de commutation à courant nul, la période minimum de l'horloge doit être :

$$14) \quad T_{min} = 2t_u$$

La figure 8 décrit un dispositif simple et sûr constituant l'horloge du bloc fonctionnel 410 permettant d'introduire la consigne de puissance par variation de la fréquence d'horloge.

Le circuit de la figure 8 comporte :

une source S de tension continue d'environ 40 volts,
un montage 81 fournissant plusieurs tensions stabilisées de l'ordre de 4 à 12 volts représentant les consignes de puissance,
une constante de temps 82 temporisant la variation de tension sur plusieurs minutes,
un montage 83,84 transformant la tension en courant de quelques milliampères ;
84 est un montage source d'un courant $i_c$ fonction linéaire de la consigne, de valeur nominale environ 20 milliampères ; 85 est un condensateur de faible valeur, par exemple 20 nF ; 86 est un diac, ayant un seuil d'avalanche d'environ 30 volts ; 87 est une temporisation de durée constante $t_u$, de, par exemple 30 microsecondes ; 88 est un montage inverseur ; 89 est un transistor déchargeant le condensateur 85 ; H est le signal de l'horloge du bloc fonctionnel 410.

Le fonctionnement est le suivant : le condensateur 85 est chargé par le courant issu du montage 84 jusqu'à ce que sa tension atteigne le seuil du diac 86. L'impulsion du diac déclenche la temporisation 87.

La durée constante $t_u$ de cette temporisation est un intervalle de temps pendant lequel la commutation est autorisée ; pendant cette durée, le condensateur 85 est déchargé et maintenu dans cet état ; le temps de charge du condensateur 85 jusqu'au seuil du diac est un temps $t_d$ inversement proportionnel au courant $i_c$ issu de la source S.

Un avantage de ce type d'horloge comprenant un oscillateur à diac, est son immunité aux perturbations électromagnétiques (parasites) résultant du fonctionnement des commutateurs.

Dans le fonctionnement du système suivant l'invention décrit dans la figure 3, le dispositif 325 de démarrage doux et le dispositif horaire 329 modifient la période T pour fournir la puissance de consigne pendant les régimes transitoires et suivant les tranches horaires programmées ; la durée (de l'ordre de la minute) des régimes transitoires est très grande devant la période (20 millisecondes) du réseau amont de telle sorte que l'hypothèse faite de la constance de $t_c$ et T est suffisamment respectée.

Dans certaines circonstances, par exemple un accident sur une lampe du groupe, la puissance imposée ne peut être absorbée. La tension secondaire définit un seuil de tension de sortie en régime transitoire de démarrage et en régime établi. Un montage 9 illustré figures 9 et 5 surveille la tension de sortie et permet de modifier la consigne de puissance injectée pour continuer l'exploitation jusqu'au rétablissement de la situation originelle.

Dans la figure 9 :

91 et 92 sont des résistances à grande valeur, par exemple 1 Mégaohm ; 93 est un condensateur haute tension de forte valeur, par exemple 470 microfarad ; 94 est un transistor MOSFET ; 95 est une diode Zenner de 120 volts ; 96 est un potentiomètre d'ajustage du seuil ; 97 est un coupleur optique.

Le fonctionnement est le suivant : en régime transitoire de démarrage, le seuil de conduction de la diode Zenner est atteint dès que la tension de sortie dépasse la valeur nominale ; la consigne de puissance croît lentement.

Lorsque la puissance en régime est atteinte, le niveau du seuil continue à croître et l'optocoupleur n'est plus en conduction.

Si la puissance fixée ne peut être consommée par suite d'un défaut, la tension seuil est atteinte, et le coupleur 97 transmet un signal de diminution de la consigne. Ce montage assure un fonctionnement stable et permet la marche à vide.

Dans d'autres circonstances, notamment un court-circuit accidentel dans la ligne alimentant le groupe de lampes, la condition de « commutation à courant nul » n'est plus remplie. L'exploitation du système doit être interrompue jusqu'à disparition du défaut. Un montage 10 illustré figures 10 et 5 assure la sécurité du système en n'autorisant la mise en commutation du commutateur 45 de la figure 5 que si la condition de « commutation à courant nul » est préalablement remplie.

Le circuit 10, figure 10 comporte : une diode 104 haute tension, une résistance 105 d'environ 100 kΩ, un coupleur 106 optoélectronique.

Le fonctionnement est le suivant : tant que la condition de commutation à courant nul n'est pas remplie, le coupleur 106 ne donne pas l'autorisation de conduction.

Si la condition est remplie avant la fin de la deuxième phase $t_d$ de la période d'horloge, le fonctionnement est normal et le temps de conduction $t_c$. est pleinement utilisé.

Si la condition n'est pas remplie pendant la première phase, le commutateur reste bloqué pendant la période.

Si la condition est remplie au cours de la première phase de la période de l'horloge, la conduction a lieu jusqu'à la fin de cette première phase. En conséquence, le temps de conduction est réduit, ainsi que la puissance injectée dans le circuit jusqu'à rétablissement de la condition de commutation à courant nul. Le montage permet donc d'assurer jusqu'à certaines limites un fonctionnement à puissance réduite lorsque la charge en sortie excède d'une manière temporaire ou permanente la puissance correspondant à la consigne.

Pendant le temps de commutation, une partie de l'énergie s'accumule dans la self-inductance de fuite du transformateur 41 et est ensuite stockée dans le condensateur 49 de la figure 5.

La puissance moyenne de fuite est de l'ordre de 20 % de la puissance transmise du primaire au secondaire.

Pour accroître le rendement et éviter l'échauffement, il est intéressant de récupérer cette énergie par le circuit auxiliaire 5 appelé « récupérateur de fuites ». Le fonctionnement de ce circuit est basé sur les propriétés du « fly-back » permettant de transmettre l'énergie d'une source de tension continue, ici le condensateur 49, à un circuit galvaniquement isolé, ici le circuit de sortie du convertisseur.

Le schéma de la figure 11 représente le bloc fonctionnel 58 :

588 est une diode Zenner (ou un montage de diodes) de seuil environ 300 volts,
589 est une résistance d'environ 10 kΩ,
5810 est un condensateur d'environ 10 nF,
5811 est un diac ayant un seuil d'avalanche d'environ 30 volts,
5812 est une temporisation de durée constante $t_F$ de par exemple 30 μs,
5813 est un montage inverseur,
5814 est un transistor déchargeant le condensateur 5810.

Le fonctionnement est le suivant : lorsque la tension du condensateur 49 dépasse 300 volts, le condensateur 5810 se charge, le diac 5811 déclenche un créneau de durée fixée, la temporisation $t_f$ d'environ 30 microsecondes provoquant la conduction du commutateur 53 et le chargement en énergie de l'inductance 51.

Lors du blocage, la plus grande part de l'énergie est transférée par le secondaire 52 et la diode 54 de la figure 5 dans le condensateur 47. L'énergie de fuite du « fly-back » du récupérateur charge le condensateur 56. La puissance de fuite secondaire est dissipée dans la résistance 57. Elle est environ dix fois plus petite que la fuite principale. Lorsque la puissance de la fuite du circuit principal 4 s'accroît, la tension du condensateur 49 croît et accroît la fréquence des créneaux augmentant ainsi la puissance du circuit récupérateur 5.

## Revendications

1. Système d'alimentation d'un groupe de lampes à décharge (999) prélevant de l'energie électrique sur le réseau de distribution alternatif alimentant en courant continu un réseau d'éclairage équipé de cet groupe de lampes
**caractérisé par le fait qu'**il comporte

- une unité centrale (32) située au point du raccordement du réseau d'énergie prélevant au réseau un courant sinusoïdal et en phase alimentant une ligne d'alimentation (33) du groupe de lampes par une source de tension continue, galvaniquement isolé du réseau fournissant au groupe de lampes une puissance réglable suivant plusieurs consignes, la dite unité centrale comportant un pont de diodes (3) et au moins un convertisseur (4) tension redressée - tension continue qui est alimenté par le pont de diode (3), le dit convertisseur comprenant un commutateur (45), un circuit de commande de commutation (410) du dit commutateur et un transformateur (41, 42) ayant un primaire et un secondaire, dont la sortie (33) est galvaniquement isolée de l'entrée (1), dont le secondaire (42) du transformateur est raccordé à une diode (46) aux bornes de laquelle est connecté un circuit (10) de contrôle de commutation courant nul du commutateur (45), le dit circuit de commande de commutation ayant aussi un circuit (6) compensateur des variations de tension alternative du réseau alimentant le pont de diode (3), le dit circuit compensateur apte à agir sur la durée de conduction du commutateur (45) afin d'assurer une puissance moyenne indépendante des varariations de la tension du réseau lorsque celle-ci est située dans sa plage de distribution contractuelle;
- une pluralité de générateurs (34) connectées à la ligne d'alimentation (33), chaque générateur situé à proximité de chaque lampe et apte à alimenter ladite lampe, chaque générateur comprenant un oscillateur (341) de rélaxation push-pull série et un amorceur (342).

2. Système d'alimentation selon la revendication 1, qui comporte plusieurs convertisseurs (4) tension redressée - tension continue dont les sorties (33) sont raccordées en parallèle.

3. Système d'alimentation selon l'une quelconque des revendications 1 ou 2, dans lequel ledit convertisseur (4) tension redressée - tension continue comporte un circuit (9) de surveillance de tension de sortie, qui comporte une diode Zenner (95) raccordée en série avec l'entrée d'un transducteur (96) à isolation galvanique tel qu'un opto-coupleur, lequel circuit est raccordé aux bornes de sortie (33) du convertisseur (4), la 30 sortie du transducteur (96) étant raccordée au circuit de commande du commutateur (45) du convertisseur (4).

4. Système d'alimentation selon l'une quelconque des revendications 1 à 3, dans lequel le circuit (10) de contrôle de commutation comporte l'entrée d'un transducteur (106) isolation galvanique dont la sortie est raccordée au circuit de commande du commutateur (45).

5. Système d'alimentation selon l'une quelconque des revendications 1 à 4, dans lequel le circuit (410, 411) de commande de commutation du commutateur (45) du convertisseur qui comporte des moyens d'horloge pour ajuster la fréquence de commutation du commutateur (45) en fonction d'une consigne de puissance à délivrer en sortie, lesquels moyens comportent de préférence une source (S) de tension continue, plusieurs tensions de référence représentant les consignes de puissance, une source (84) de courant proportionnel à la tension représentant la consigne de puissance, un condensateur (85), un diac (86), une temporisation (87) de durée constante.

6. Système d'alimentation selon l'une quelconque des revendications 1 à 5, dans lequel le circuit compensateur comporte une diode (61), une résistance (62) et un condensateur (63) fournissant une tension continue représentant la tension efficace du réseau, un circuit RC (64, 65) dont le condensateur est périodiquement déchargé par l'horloge du convertisseur, une source (68) d'une tension de référence et un comparateur (69) apte à diminuer la consigne de puissance.

7. Système d'alimentation selon l'une quelconque des revendications 1 à 6, qui comporte trois ponts de diode (3) et trois, six ou neuf convertisseurs (4) dont les sorties sont raccordée en parallèle.

8. Système d'alimentation selon l'une quelconque des revendications 1 à 7, qui comporte un circuit (5) récupérateur des fuites du (ou des) circuit(s) magnètique(s) du (ou des) transformateur(s) principal(-aux) (41, 42), lequel circuit (5) comporte un transformateur secondaire (51, 52) dont le secondaire (52) disposé en série avec une diode (54) est raccordé en sortie (33) du convertisseur (4).

**Claims**

1. Power supply system for a group of gas discharge lamps (999) drawing electrical energy from the AC distribution grid and supplying a lighting network fitted with this group of lamps with DC current. **characterized in that** it comprises:

   - a central unit (32) located at the point of connection to the energy grid, drawing in-phase sinusoidal current from the grid, feeding a supply line (33) for a group of lamps from a source of constant voltage, galvanically isolated from the grid, supplying the group of lamps with power at several different setpoints, the said central unit comprising a diode bridge (3) and at least one rectified voltage - continuous voltage converter (4) that is supplied by the diode bridge (3), the said converter comprising a switch (45), a circuit that controls the switching (410) of the said switch and a transformer (41, 42) that has a primary and secondary, whose output (33) is galvanically isolated from the input (1), the secondary (42) of the transformer being connected to a diode (46) at whose terminals are connected a circuit (10) that controls the switching of the zero current of the switch (45), the said switching control circuit also having a circuit (6) that compensates for variations in the alternating voltage in the network supplying the diode bridge (3), the said compensator circuit being capable of influencing the duration of the conduction phase of the switch (45) in order to ensure an average power that is independent of the normal voltage variations (within the contractual distribution range) in the grid;
   - several generators (34) connected to the supply line (33), each generator located close to each lamp and capable of supplying the said lamp, each generator comprising a serial push-pull relaxation oscillator (341) and a starter (342).

2. Power supply system according to claim 1, comprising several rectified voltage - continuous voltage converters (4) whose outputs (33) are connected in parallel.

3. Power supply system according to either of claims 1 or 2, in which the said rectified voltage - continuous voltage converter (4) comprises a circuit (9) to check the output voltage, the said circuit comprising a Zenner diode (95) connected in series with the input of a galvanically isolated transducer (96) such as an optocoupler, the said circuit being connected to the output terminals (33) of the converter (4), the ??30?? output of the transducer (96) being connected to the control circuit of the switch (45) of the converter (4).

4. Power supply system according to any one of claims 1 to 3, in which the switching control circuit (10) comprises the input of a galvanically isolated transducer (106) whose output is connected to the control circuit of the switch (45).

5. Power supply system according to any one of claims 1 to 4, in which the switching control circuit (410, 411) of the switch (45) of the converter comprises timers to adjust the switching frequency of the switch (45) as a function of a setpoint of the power to be delivered at the output, the said timers preferably comprising a source (S) of continuous voltage, several reference voltages corresponding to the power setpoints, a source (84) of current proportional to the voltage corresponding to the power setpoint, a condenser (85), a Diac (86) and a fixed delay time (87).

6. Power supply system according to any one of claims 1 to 5, in which the compensator circuit comprises a diode (61), a resistor (62) and a condenser (63), supplying a continuous voltage corresponding to the Root Mean Square voltage of the grid, an RC circuit (64, 65) in which the condenser is periodically discharged by the converter timer, a source (68) of a reference voltage and a comparator (69) capable of reducing the power setpoint.

7. Power supply system according to any one of claims 1 to 6, which comprises three diode bridges (3) and three, six or nine converters (4) whose outputs are connected in parallel.

8. Power supply system according to any one of claims 1 to 7, which comprises a circuit (5) to recover losses from the magnetic circuit(s) of the main transformer (s) (41, 42), the said circuit (5) comprising a secondary transformer (51, 52) whose secondary is arranged in series with a diode (54) and is connected to the output (33) of the converter (4).

**Patentansprüche**

1. Ein Versorgungssystem einer Gruppe von Gasentladungslampen (999) die mit Strom aus einem Wechselsttromnetz versorgt werden und das ein Beleuchtungsnetz mit dieser Art Lampen mit Gleichstrom versorgt und folgende Elemente aufweist:

   - Eine Zentraleinheit (32), die sich an dem Verbindungsstück des Energienetzes befindet und dem Netz einen sinusförmigen Wechselstrom entnimmt und eine Netzzuleitung (33) der Lampengruppe durch eine Gleichspannungsquelle versorgt, die von dem Netz galvanisch isoliert ist und die Lampengruppe mit einer nach verschiedenen Parametern einstellbaren Leistung versorgt. Die sogenannte Zentraleinheit besteht aus einer Diodenbrücke (3) und mindestens einem Konverter (4) gleichgerichtete Spannung - Gleichspannung, der über die Diodenbrücke (3) versorgt wird. Der Konverter besteht aus einem Kommutator, einem Schaltsteuerstromkreis (410) des vorher genannten Kommutators und einem Transfomator (41, 42) mit einem primären und sekondären, dessen Ausgang (33) galvanisch vom Eingang isoliert ist (1). Der sekondäre (42) des Transformators ist an eine Diode 46) angeschlossen an deren Klemmen ein Kontrollschaltkreis (10) Kommutator Strom null (45) angeschlossen ist. Dieser Kontrollschaltkreis hat auch ein Kompensationnetz (6) für die Wechselspannungsvariationen des Netzes, das die Diodenbrücke versorgt (3). Das Kompensationsnetz beeinflusst die Leitungsdauer des Kommutators (45), um eine von den Variationen der Netzspannung unabhängige Durchschnittsleistung zu gewährleisten, wenn sich diese in der Spanne der vertraglich festgesetzten Energieverteilung befindet.
- Eine Vielzahl von Generatoren (34), die an die Netzzuleitung angeschlossen (33) sind. Jeder Generator, der sich in unmittelbarer Nähe einer Lampe befindet, versorgt diese Lampe. Jeder Generator besteht aus einem Entspannungsoszillator (341) der Reihe push-pull und einem Einschwinger (342).

2. Ein Versorgungssystem gemäss Forderung 1, das aus mehreren Konvertern (4) gleichgerichtete Spannung - Gleichspannung und deren Ausgänge (33) parallel angeschlossen sind.

3. Ein Versorgungssystem beliebig gemäss Forderung 1 oder 2, in dem der Konverter (4) gleichgerichtete Spannung - Gleichspannung aus einem Überwachungsnetz der Ausgangsspannung (9) besteht, das eine Zenner Diode hat (95), die in Serie an den Eingang eines galvanisch isolierten Messwandlers (96) angeschlossen ist, wie z B ein Optokoppler. Das Netz ist an den Ausgangsklemmen (33) des Konverters (4) angeschlossen. Der Ausgang des Messwandlers (96) ist an das Schaltsteuerstromnetz (45) des Konverters (4) angeschlossen.

4. Ein Versorgungssystem beliebig gemäss Forderung 1 bis 3, in dem der Kontrollschaltkreis (10) den Eingang des galvanisch isolierten Messwandlers (106) aufweist und dessen Ausgang an den Schaltsteuerstromkreis (45) angeschlossen ist.

5. Ein Versorgungssystem beliebig gemäss Forderung 1 bis 4, in dem der Umschaltungskreis (410, 411) des Kommutators (45) des Konverters eine Uhr enthält um die Schaltfrequenz des Kommutators (45) je nach der Leistungsanforderung am Ausgang zu regeln. Diese Mittel sollten vorzugsweise eine Gleichspannungquelle (S) haben. Mehrere Referenzspannungen stellen die Leistungsbestimmungen dar, eine Stromquelle (84), die im Verhältnis zur Spannung steht, stellt die Leistungsbestimmung dar, einen Kondensator(85), eine DIAC (86), eine Schaltverzögerung (87) mit konstanter Dauer.

6. Ein Versorgungssystem beliebig gemäss Forderung 1 bis 5, wo der Ausgleichskreis eine Diode (61), einen Widerstand (62) und einen Kondensator (63) hat und eine Gleichspannung verteilt, die der Netzspannung entspricht, sowie einen RC Kreis (64, 65) dessen Kondensator periodisch durch die Uhr des Konverters entladen wird, eine Referenzspannungsquelle (68) und einen Comparator (69) der den Leistungssollwert senken kann.

7. Ein Versorgungssystem beliebig gemäss Forderung 1 bis 6, das 3 Diodenbrücken hat (3) und 3, 6 oder 9 Konverter (4) deren Ausgänge parallel angeschlossen sind.

8. Ein Versorgungssystem beliebig gemäss Forderung 1 bis 7, das einen Rekuperatorkreis (5) für Leckstrom der Magnetkreise des Haupttransformators hat (41, 42). Dieser Kreis (5) hat einen sekondären Transformator (51, 52), dessen sekondäre (52) in Serie mit einer Diode (54) geschaltet ist und am Ausgang (33) des Konverters angeschlossen ist (4).

FIG.1

FIG.2

FIG.3

FIG.4

FIG.5

FIG.6

FIG.7

FIG.8

FIG.9

FIG.10

FIG.11

**EP 0 970 593 B1**

## RÉFÉRENCES CITÉES DANS LA DESCRIPTION

### Documents brevets cités dans la description

- FR 2542152
- US 4630005 A
- US 4277728 A